(19)

**Europäisches Patentamt**
**European Patent Office**
**Office européen des brevets**

(11)  **EP 4 265 687 A1**

(12)  # EUROPEAN PATENT APPLICATION

(43) Date of publication:
**25.10.2023 Bulletin 2023/43**

(21) Application number: **23167911.9**

(22) Date of filing: **14.04.2023**

(51) International Patent Classification (IPC):
*C08L 77/06* (2006.01)     *C08L 77/02* (2006.01)
*C08J 5/04* (2006.01)      *C08K 3/34* (2006.01)
*C08K 7/14* (2006.01)      *C08G 69/40* (2006.01)

(52) Cooperative Patent Classification (CPC):
(C-Sets available)
**C08L 77/02; C08K 3/346; C08K 7/14; C08L 77/06;**
C08G 69/40                                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.04.2022 KR 20220047574**

(71) Applicant: **Lotte Chemical Corporation**
**Seoul, 05551 (KR)**

(72) Inventors:
• **KIM, Myeong Hwan**
  **16073 Gyeonggi-do (KR)**
• **PARK, Sang Ki**
  **16073 Gyeonggi-do (KR)**
• **LEE, Bong Jae**
  **16073 Gyeonggi-do (KR)**
• **LEE, Jung Hun**
  **16073 Gyeonggi-do (KR)**

(74) Representative: **Germain Maureau**
  **12, rue Boileau**
  **69006 Lyon (FR)**

(54)  **POLYAMIDE RESIN COMPOSITION AND MOLDED ARTICLE COMPRISING THE SAME**

(57)    The present application provides a polyamide resin composition and a molded article comprising the same. The polyamide resin composition includes: 100 parts by weight of a polyamide resin including 5% by weight (wt%) to 55 wt% of an aromatic polyamide resin and 45 wt% to 95 wt% of an aliphatic polyamide resin; 100 parts by weight to 200 parts by weight of glass fiber; 20 parts by weight to 25 parts by weight of a poly(ether ester amide) block copolymer; and 0.1 parts by weight to 2 parts by weight of talc, wherein the poly(ether ester amide) block copolymer is a block copolymer of a reaction mixture including an amino carboxylic acid having 6 or more carbon atoms, a lactam or a salt of diamine-dicarboxylic acid, polytetramethylene glycol, and a dicarboxylic acid having 4 to 20 carbon atoms. The polyamide resin composition has good properties in terms of bonding strength and detachability with respect to a polyurethane bonding agent, impact resistance, heat resistance, rigidity, and the like.

EP 4 265 687 A1

(52) Cooperative Patent Classification (CPC): (Cont.)

C-Sets
**C08L 77/06, C08K 3/346, C08K 7/14,
C08L 77/02, C08L 77/06**

**Description**

**Field of the Invention**

The present invention relates to a polyamide resin composition and a molded article comprising the same. More particularly, the present invention relates to a polyamide resin composition, which has good properties in terms of bonding strength and detachability with respect to a polyurethane bonding agent, impact resistance, heat resistance, rigidity, and the like, and a molded article comprising the same.

**Description of the Related Art**

A polyamide resin has good processability and impact resistance and is advantageously used in housings of various products, interior/exterior materials of automobiles, and the like. The polyamide resin may be mixed with inorganic fillers, such as glass fibers and the like, to improve heat resistance, mechanical properties including rigidity, and the like, and application of the polyamide resin has expanded to housings of electronic products according to the trend toward compactness and weight reduction.

In assembly of components of electric/electronic products, automobiles, and the like, a bonding process is performed using a bonding tape or a bonding agent. Since a bonding process using a PUR (polyurethane reactive) type polyurethane bonding agent is simpler than a bonding process using a bonding tape, the PUR type polyurethane bonding agent is advantageous in improvement in productivity and ensures good adhesion. In particular, the PUR type polyurethane bonding agent has good efficiency when a bonding area is narrow.

However, application of the polyurethane bonding agent is limited due to very poor adhesion with respect to a polyamide resin.

Therefore, there is a need for a polyamide resin composition that ensures improvement in adhesion and detachability with respect to a polyurethane bonding agent to provide a polyamide resin with applicability to various industrial fields.

The background technique of the present invention is disclosed in US Patent Publication No. 2014/0179850 and the like.

**Summary of the Invention**

It is an aspect of the present invention to provide a polyamide resin composition, which has good properties in terms of bonding strength and detachability with respect to a polyurethane bonding agent, impact resistance, heat resistance, rigidity, and the like, and a molded article comprising the same.

1. One aspect of the present invention relates to a polyamide resin composition. The polyamide resin composition may include: 100 parts by weight of a polyamide resin including 5% by weight (wt%) to 55 wt% of an aromatic polyamide resin and 45 wt% to 95 wt% of an aliphatic polyamide resin; 100 parts by weight to 200 parts by weight of glass fiber; 20 parts by weight to 25 parts by weight of a poly(ether ester amide) block copolymer; and 0.1 parts by weight to 2 parts by weight of talc, wherein the poly(ether ester amide) block copolymer is a block copolymer of a reaction mixture including an amino carboxylic acid having 6 or more carbon atoms, a lactam or a salt of diamine-dicarboxylic acid, polytetramethylene glycol, and a dicarboxylic acid having 4 to 20 carbon atoms.

2. In embodiment 1, the aromatic polyamide resin may be a polymer of an aliphatic dicarboxylic acid and an aromatic diamine.

3. In embodiment 1 or 2, the aliphatic polyamide resin may include at least one of polyamide 11, polyamide 12, polyamide 4.6, polyamide 6.6, polyamide 6.10, polyamide 6.12, polyamide 10.10, and polyamide 10.12.

4. In embodiment 1 to 3, the glass fiber may have a rectangular or elliptical cross-section, a cross-section aspect ratio (long-side length/short-side length in cross-section) of 1.5 to 10, and a short-side length of 2 $\mu$m to 10 $\mu$m in cross-section.

5. In embodiments 1 to 4, the glass fiber and the poly(ether ester amide) block copolymer may be present in a weight ratio of 1:0.1 to 1:0.2.

6. In embodiments 1 to 5, the poly(ether ester amide) block copolymer and the talc may be present in a weight ratio of 1:0.005 to 1:0.08.

7. In embodiments 1 to 6, the polyamide resin composition may have a bonding strength (potential energy) of 700 mJ to 950 mJ, as measured upon detachment of a specimen having a size of 50 mm × 50 mm × 4 mm from a glass plate having a size of 25 mm × 25 mm × 0.7 mm by dropping a dart having a mass of 10 g to 500 g from a height of 50 cm onto the specimen using a dropping tester, with the dart secured to an upper end of the dropping tester and the specimen secured to a lower end thereof, in accordance with a DuPont drop test, in which 0.018 g of a polyurethane-based bonding agent (EH9777BS, H.B. Fuller Co., Ltd.) is coated to a thickness of 1 mm on the specimen at 110°C and the glass plate is attached to the specimen via the polyurethane-based bonding agent, followed by curing the polyurethane-based bonding agent at 25°C and 50% RH for 72 hours.

8. In embodiments 1 to 7, the polyamide resin composition may prevent a bonding agent from remaining on a specimen having a size of 50 mm × 50 mm × 4 mm upon detachment of the specimen from a glass plate having a size of 25 mm × 25 mm × 0.7 mm by dropping a dart having a diameter of 5 mm onto the specimen at a dropping rate of 20 mm/min using a universal testing machine (UTM), with the dart secured to an upper jig of the UTM and the glass plate secured to a lower end thereof, in which 0.018 g of a polyurethane-based bonding agent (EH9777BS, H.B. Fuller Co., Ltd.) is coated to a thickness of 1 mm on the specimen at 110°C and the glass plate is attached to the specimen via the polyurethane-based bonding agent, followed by curing the polyurethane-based bonding agent at 25°C and 50% RH for 72 hours and heating the polyurethane-based bonding agent at 75°C for 15 min.

9. In embodiments 1 to 8, the polyamide resin composition may have a notched Izod impact strength of 14 kgf·cm/cm to 30 kgf cm/cm, as measured on a 1/8" thick specimen in accordance with ASTM D256.

10. In embodiments 1 to 9, the polyamide resin composition may have a heat deflection temperature (HDT) of 175°C to 190°C, as measured under a load of 1.82 MPa at a heating rate of 120°C/hr in accordance with ASTM D648.

11. In embodiments 1 to 10, the polyamide resin composition may have a flexural modulus of 90,000 kgf/cm$^2$ to 180,000 kgf/cm$^2$, as measured on a 6.4 mm thick specimen at a rate of 2.8 mm/min in accordance with ASTM D790.

12. Another aspect of the present invention relates to a molded article. The molded article is formed of the polyamide resin composition according to any one of embodiments 1 to 11.

13. In embodiment 12, the molded article may be an electronic device housing including a glass frame and a plastic member adjoining at least one surface of the glass frame.

**Brief Description of the Drawings**

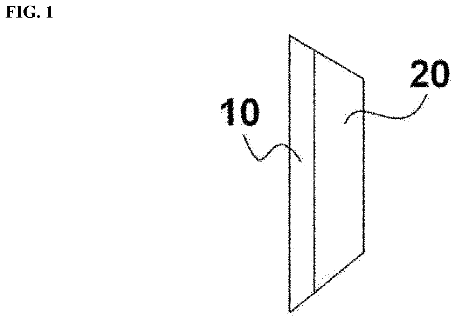

FIG. 1 is a schematic sectional view of an electronic device housing according to one embodiment of the present invention.

**Detailed Description of the Invention**

Hereinafter, exemplary embodiments of the present invention will be described in detail.

A polyamide resin composition according to the present invention includes: (A) an aromatic polyamide resin; (B) an aliphatic polyamide resin; (C) glass fiber; (D) a poly(ether ester amide) block copolymer; and (E) talc.

As used herein to represent a specific numerical range, "a to b" is defined as "≥a and ≤b".

(A) Aromatic polyamide resin

According to the present invention, the aromatic polyamide resin serves to improve the properties of the polyamide resin composition in terms of bonding strength and detachability with respect to a polyurethane bonding agent, impact resistance, heat resistance, rigidity, and the like together with the aliphatic polyamide resin, the glass fiber, the poly(ether ester amide) block copolymer and talc, and may be an aromatic polyamide resin used in typical polyamide resin compositions.

In some embodiments, the aromatic polyamide resin may be a polymer of an aliphatic dicarboxylic acid and an aromatic diamine, which is prepared by a polymerization method known to those skilled in the art.

Herein, the term "dicarboxylic acid" and the like are used as meanings including dicarboxylic acid, alkyl esters thereof ($C_1$ to $C_4$ lower alkyl esters, such as monomethyl, monoethyl, dimethyl, diethyl, dibutyl ester, and the like), and acid anhydrides thereof, and form a repeat unit (dicarboxylic acid moiety) derived from dicarboxylic acid through reaction with diamine and the like. In addition, as used herein, a repeat unit derived from dicarboxylic acid and a repeat unit (diamine moiety) derived from diamine mean residues remaining after removal of a hydrogen atom (removed from an amine group), a hydroxyl group or an alkoxy group (removed from a carboxylic acid) upon polymerization of the dicarboxylic acid and the diamine, respectively.

In some embodiments, the aliphatic dicarboxylic acid may be a $C_6$ to $C_{20}$ linear, branched, or cyclic aliphatic dicarboxylic acid, for example, adipic acid, sebacic acid, 1,4-cyclohexanedicarboxylic acid, 1,3-cyclohexanedicarboxylic acid, and the like. Specifically, the aliphatic dicarboxylic acid may be adipic acid or sebacic acid.

In some embodiments, the aromatic diamine may be at least one type of $C_6$ to $C_{30}$ aromatic diamine. For example, the aromatic diamine may be selected from among phenylene diamine compounds, such as m-phenylene diamine and p-phenylene diamine, xylene diamine compounds, such as m-xylene diamine and p-xylene diamine, naphthalene diamine compounds, and the like.

In some embodiments, in the aromatic polyamide resin, a mole ratio (dicarboxylic acid/diamine) of the repeat unit derived from the dicarboxylic acid to the repeat unit derived from the diamine may range from 0.95 to 1.15, for example, from 1.00 to 1.10. Within this range, the polyamide resin composition can form a polyamide resin having a suitable degree of polymerization for molding and can prevent deterioration in properties due to unreacted monomers.

In some embodiments, the aromatic polyamide resin may have a glass transition temperature of 30°C to 100°C, for example, 40°C to 80°C, as measured by differential scanning calorimetry (DSC). Within this range, the polyamide resin composition can exhibit good properties in terms of heat resistance, rigidity, impact resistance, and the like.

In addition, the aromatic polyamide resin may have an inherent viscosity [$\eta$] of 0.7 dL/g to 1.2 dL/g, for example, 0.8 dL/g to 1.0 dL/g, as measured on a sample using an Ubbelohde viscometer at 25 °C, in which the sample is prepared by dissolving the aromatic polyamide resin to a concentration of 0.5 g/dL in a concentrated sulfuric acid solution (98%). Within this range, the polyamide resin composition can have good properties in terms of heat resistance, rigidity, impact resistance, and the like.

Specifically, the aromatic polyamide resin may be present in an amount of 5 wt% to 55 wt%, for example, 14 wt% to 45 wt%, based on 100 wt% of all of the polyamide resins (including the aromatic polyamide resin and the aliphatic polyamide resin). In some embodiments, the aromatic polyamide resin may be present in an amount of about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, or 55 wt%, based on 100 wt% of all of the polyamide resins (including the aromatic polyamide resin and the aliphatic polyamide resin). Further, according to some embodiments, the aromatic polyamide resin can be present in an amount of from about any of the foregoing amounts to about any other of the foregoing amounts. If the content of the aromatic polyamide resin is less than 5 wt%, the polyamide resin composition can suffer from deterioration in detachability and the like, and if the content of the aromatic polyamide resin exceeds 55 wt%, the polyamide resin composition can suffer from deterioration in impact resistance, heat resistance, and the like.

(B) Aliphatic polyamide resin

According to the present invention, the aliphatic polyamide resin serves to improve the properties of the polyamide resin composition in terms of bonding strength and detachability with respect to a polyurethane bonding agent, impact resistance, heat resistance, rigidity, and the like together with the aromatic polyamide resin, the glass fiber, the poly(ether ester amide) block copolymer and talc, and may be an aliphatic polyamide resin used in typical polyamide resin compositions.

In some embodiments, the aliphatic polyamide resin may include at least one of polyamide 11, polyamide 12, polyamide 4.6, polyamide 6.6, polyamide 6.10, polyamide 6.12, polyamide 10.10, and polyamide 10.12.

In some embodiments, the aliphatic polyamide resin may have a relative viscosity [$\eta_{rel}$] of 2 to 3, for example, 2.3 to 2.8, as measured on a sample using an Ubbelohde viscometer at 25°C, in which the sample is prepared by dissolving the aliphatic polyamide resin to a concentration of 0.5 g/dL in a concentrated sulfuric acid solution (96%). Within this range, the polyamide resin composition can have good processability and impact resistance.

In some embodiments, the aliphatic polyamide resin may be present in an amount of 45 wt% to 95 wt%, for example, 55 wt% to 86 wt%, based on 100 wt% of all of the polyamide resins (including the aromatic polyamide resin and the aliphatic polyamide resin). In some embodiments, the aliphatic polyamide resin may be present in an amount of about 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95 wt%, based on 100 wt% of all of the polyamide resins (including the aromatic polyamide resin and the aliphatic polyamide resin). Further, according to some embodiments, the aliphatic polyamide resin can be present in an amount of from about any of the foregoing amounts to about any other of the foregoing amounts. If the content of the aliphatic polyamide resin is less than 45 wt%, the polyamide resin composition can suffer from deterioration in impact resistance, heat resistance, and the like, and if the content of the aliphatic polyamide resin exceeds 95 wt%, the polyamide resin composition can suffer from deterioration in detachability and the like.

(C) Glass fiber

According to the present invention, the glass fiber serves to improve the properties of the polyamide resin composition in terms of bonding strength and detachability with respect to a polyurethane bonding agent, impact resistance, heat resistance, rigidity, and the like together with the aromatic polyamide resin, the aliphatic polyamide resin, the poly(ether ester amide) block copolymer and talc, and may be glass fiber used in typical polyamide resin compositions.

In some embodiments, the glass fiber may have a cross-section of various shapes, such as a circular shape, an elliptical shape, a rectangular shape, and the like.

In some embodiments, the glass fiber may be a flat type glass fiber having a rectangular or elliptical cross-section. The flat type glass fiber may have a cross-section aspect ratio (long-side length/short-side length in cross-section) of 1.5 to 10, for example, 2 to 8, a short-side length of 2 $\mu$m to 10 $\mu$m, for example, 4 $\mu$m to 8 $\mu$m, in cross-

section, and a pre-processing length of 1 mm to 15 mm, for example, 2 to 8 mm, as measured using a scanning electron microscope (SEM). Within this range, the polyamide resin composition can achieve improvement in rigidity, processability, and the like.

In some embodiments, the glass fiber may be subjected to surface treatment using a typical surfactant.

In some embodiments, the glass fiber may be present in an amount of 100 to 200 parts by weight, for example, 120 to 180 parts by weight, relative to 100 parts by weight of the polyamide resin (including the aromatic polyamide resin and the aliphatic polyamide resin). In some embodiments, the polyamide resin composition may include the glass fiber in an amount of about 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, or 200 parts by weight, relative to about 100 parts by weight of the polyamide resin (including the aromatic polyamide resin and the aliphatic polyamide resin). Further, according to some embodiments, the glass fiber can be present in an amount of from about any of the foregoing amounts to about any other of the foregoing amounts. If the content of the glass fiber is less than 100 parts by weight relative to 100 parts by weight of the polyamide resin, the polyamide resin composition can suffer from deterioration in impact resistance, heat resistance, rigidity, and the like, and if the content of the glass fiber exceeds 200 parts by weight, the polyamide resin composition can suffer from deterioration in adhesion and detachability.

(D) Poly(ether ester amide) block copolymer

According to the present invention, the poly(ether ester amide) block copolymer serves to improve the properties of the polyamide resin composition in terms of bonding strength and detachability with respect to a polyurethane bonding agent, impact resistance, heat resistance, rigidity, and the like together with the aromatic polyamide resin, the aliphatic polyamide resin, the glass fiber and talc. The poly(ether ester amide) block copolymer may be a block copolymer of a reaction mixture including an amino carboxylic acid having 6 or more carbon atoms, a lactam or a salt of diamine-dicarboxylic acid, polytetramethylene glycol, and a dicarboxylic acid having 4 to 20 carbon atoms.

In some embodiments, the amino carboxylic acid having 6 or more carbon atoms, the lactam or the salt of diamine-dicarboxylic acid may include, for example, amino carboxylic acids, such as ω-aminocaproic acid, ω-amino oenanthic acid, ω-aminocaprylic acid, ω-aminononanoic acid, ω-aminocapric acid, 1,1-aminoundecanoic acid, 1,2-aminododecanoic acid, and the like; lactams, such as caprolactam, oenantholactam, caprolactam, laurolactam, and the like; and salts of diamine-dicarboxylic acid, such as a salt of hexamethylene diamine-adipic acid, a salt of hexamethylene diamine-isophthalic acid, and the like. For example, 1,2-aminododecane acid, caprolactam, or a salt of hexamethylene diamine-adipic acid may be used.

In some embodiments, the dicarboxylic acid having 4 to 20 carbon atoms may include, for example, terephthalic acid, 1,4-cyclohexacarboxylic acid, sebacic acid, adipic acid, dodecanedioic acid, and the like.

Specifically, a bond between the amino carboxylic acid having 6 or more carbon atoms, the lactam or the salt of diamine-dicarboxylic acid and the polytetramethylene glycol may be an ester bond; a bond between the amino carboxylic acid having 6 or more carbon atoms, the lactam or the salt of diamine-dicarboxylic acid and the dicarboxylic acid having 4 to 20 carbon atoms may be an amide bond; and a bond between the polytetramethylene glycol and the dicarboxylic acid having 4 to 20 carbon atoms may be an ester bond.

In some embodiments, the poly(ether ester amide) block copolymer may be prepared by a preparation method known to those skilled in the art. For example, the poly(ether ester amide) block copolymer may be prepared by a method disclosed in JP

Patent Publication No. S56-045419 and JP Unexamined Patent Publication No. S55-133424.

In some embodiments, the poly(ether ester amide) block copolymer may include 10 wt% to 95 wt% of a polyether-ester block. Within this range, the polyamide resin composition can exhibit good impact resistance.

In some embodiments, the poly(ether ester amide) block copolymer may be present in an amount of 20 to 25 parts by weight, for example, 21 to 24 parts by weight, relative to 100 parts by weight of the polyamide resin (including the aromatic polyamide resin and the aliphatic polyamide resin). In some embodiments, the polyamide resin composition may include the poly(ether ester amide) block copolymer in an amount of about 20, 21, 22, 23, 24, or 25 parts by weight, relative to about 100 parts by weight of the polyamide resin (including the aromatic polyamide resin and the aliphatic polyamide resin). Further, according to some embodiments, the poly(ether ester amide) block copolymer can be present in an amount of from about any of the foregoing amounts to about any other of the foregoing amounts. If the content of the poly(ether ester amide) block copolymer is less than 20 parts by weight relative to 100 parts by weight of the polyamide resin, the polyamide resin composition can suffer from deterioration in adhesion and the like, and if the content of the poly(ether ester amide) block copolymer exceeds 25 parts by weight, the polyamide resin composition can suffer from deterioration in detachability and the like.

In some embodiments, the glass fiber (C) and the poly(ether ester amide) block copolymer (D) may be present in a weight ratio (C:D) of 1:0.1 to 1:0.2, for example, 1:0.11 to 1:0.19. In some embodiments, the glass fiber (C) and the poly(ether ester amide) block copolymer (D) may be present in a weight ratio (C:D) of about 1:0.1, 1:0.11, 1:0.12, 1:0.13, 1:0.14, 1:0.15, 1:0.16, 1:0.17, 1:0.18, 1:0.19, or 1:0.2. Further, according to some embodiments, the glass fiber (C) and the poly(ether ester amide) block copolymer (D) may be present in a weight ratio (C:D) of from about any of the foregoing weight ratios to about any other of the foregoing weight ratios. Within this range, the polyamide resin composition can exhibit better adhesion, detachment, and the like.

(E) Talc

According to the present invention, talc serves to improve to improve the properties of the polyamide resin composition in terms of bonding strength and detachability with respect to a polyurethane bonding agent, impact resistance, heat resistance, rigidity, and the like together with the aromatic polyamide resin, the aliphatic polyamide resin, the glass fiber, and the poly(ether ester amide) block copolymer, and may be talc used in typical polyamide resin compositions.

In some embodiments, the talc may be flake type inorganic fillers and may have an average particle diameter of 0.5 μm to 10 μm, for example, 1 μm to 7 μm, as measured by a particle analyzer (Malvern Mastersizer 3000). Within this range, the polyamide resin composition can exhibit good adhesion, detachment, heat resistance, and the like.

In some embodiments, the talc may be present in an amount of 0.1 to 2 parts by weight, for example, 0.2 to 1 part by weight, relative to 100 parts by weight of the polyamide resin (including the aromatic polyamide resin and the aliphatic polyamide resin). In some embodiments, the polyamide resin composition may include the talc in an amount of about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2 parts by weight, relative to about 100 parts by weight of the polyamide resin (including the aromatic polyamide resin and the aliphatic polyamide resin). Further, according to some embodiments, the talc can be present in an amount of from about any of the foregoing amounts to about any other of the foregoing amounts. If the content of the talc is less than 0.1 parts by weight relative to 100 parts by weight of the polyamide resin, the polyamide resin composition can suffer from deterioration in heat resistance and the like, and if the content of the talc exceeds 2 parts by weight, the polyamide resin composition can suffer from deterioration in impact resistance and the like.

In some embodiments, the poly(ether ester amide) block copolymer (D) and the talc (E) may be present in a weight ratio (D:E) of 1:0.005 to 1:0.08, for example, 1:0.008 to 1:0.06. In some embodiments, the poly(ether ester amide) block copolymer (D) and the talc (E) may be present in a weight ratio (D:E) of about 1:0.005, 1:0.006, 1:0.007, 1:0.008, 1:0.009, 1:0.01, 1:0.02, 1:0.03, 1:0.04, 1:0.05, 1:0.06, 1:0.07, or 1:0.08. Further, according to some embodiments, the poly(ether ester amide) block copolymer (D) and the talc (E) may be present in a weight ratio of from about any of the foregoing weight ratios to about any other of the foregoing weight ratios. Within this range, the polyamide resin composition can exhibit good properties in terms of adhesion, detachment, heat resistance, rigidity, and the like.

The polyamide resin composition according to the present invention may further include typical additives, as needed, so long as the additives do not inhibit the effects of the present invention. The additives may include a heat stabilizer, a flame retardant, an antioxidant, a lubricant, a release agent, a nucleating agent, a colorant, or mixtures thereof, without being limited thereto. The additives may be present in an amount of 0.001 to 40 parts by weight, for example, 0.1 to 20 parts by weight, relative to 100 parts by weight of the polyamide resin (including the aromatic polyamide resin and the aliphatic polyamide resin). In some embodiments, the polyamide resin composition may include the additive(s) in an amount of about 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by weight, relative to about 100 parts by weight of the polyamide resin (including the aromatic polyamide resin and the aliphatic polyamide resin). Further, according to some embodiments, the additive(s) can be present in an amount of from about any of the foregoing amounts to about any other of the foregoing amounts.

The polyamide resin composition according to one embodiment may be prepared in pellet form by mixing the aforementioned components, followed by melt extrusion in a typical twin screw extruder at 240°C to 320°C, for example, at 250°C to 310°C.

In some embodiments, the polyamide resin composition may have a bonding strength (potential energy) of 700 mJ to 950 mJ, for example, 750 mJ to 900 mJ, as measured upon detachment of a specimen having a size of 50 mm × 50 mm × 4 mm from a glass plate having a size of 25 mm × 25 mm × 0.7 mm by dropping a dart having a mass of 10 g to 500 g from a height of 50 cm onto the specimen using a dropping tester, with the dart secured to an upper end of the dropping tester and the specimen secured to a lower end thereof, in accordance with a DuPont drop test, in which 0.018 g of a polyurethane-based bonding agent (EH9777BS, H.B. Fuller Co., Ltd.) is coated to a thickness of 1 mm on the specimen at 110°C and the glass plate is attached to the specimen via the polyurethane-based bonding agent, followed by curing the polyurethane-based bonding agent at 25°C and 50% RH for 72 hours.

In some embodiments, the polyamide resin composition may prevent a bonding agent from remaining on a specimen having a size of 50 mm × 50 mm × 4 mm upon detachment of the specimen from a glass plate having a size of 25 mm × 25 mm × 0.7 mm by dropping a dart having a diameter of 5 mm onto the specimen at a dropping rate of 20 mm/min using a universal testing machine (UTM), with the dart secured to an upper jig of the UTM and the glass plate secured to a lower end thereof, in which 0.018 g of a polyurethane-based bonding agent (EH9777BS, H.B. Fuller Co., Ltd.) is coated to a thickness of 1 mm on the specimen at 110°C and the glass plate is attached to the specimen via the polyurethane-based bonding agent, followed by curing the polyurethane-based bonding agent at 25°C and 50% RH for 72 hours and heating the polyurethane-based bonding agent at 75°C for 15 min.

In some embodiments, the polyamide resin composition may have a notched Izod impact strength of 14 kgf·cm/cm to 30 kgf cm/cm, for example, 15 kgf·cm/cm to 25 kgf cm/cm, as measured on a 1/8" thick specimen in accordance with ASTM D256.

In some embodiments, the polyamide resin composition may have a heat deflection temperature (HDT) of 175°C to 190°C, for example, 177°C to 187°C, as measured under a load of 1.82 MPa at a heating rate of 120°C/hr in accordance with ASTM D648.

In some embodiments, the polyamide resin composition may have a flexural modulus of 90,000 kgf/cm$^2$ to 180,000 kgf/cm$^2$, for example, 100,000 kgf/cm$^2$ to 150,000 kgf/cm$^2$, as measured on a 6.4 mm thick specimen at a rate of 2.8 mm/min in accordance with ASTM D790.

A molded article according to the present invention is produced from the polyamide resin composition.

Specifically, the molded article may be an electronic device housing including a glass frame and a plastic member adjoining at least one surface of the glass frame.

FIG. 1 is a schematic sectional view of an electronic device housing according to one embodiment. Although lengths, thicknesses or widths of components constituting the present invention may be exaggerated in the drawings for clarity, it should be understood that the present invention is not limited thereto. Referring to FIG. 1, the electronic device housing according to the embodiment includes a glass frame 10 and a plastic member 20 adjoining at least one surface of the glass frame 10, in which the plastic member 20 is formed of the polyamide resin composition.

In some embodiments, the glass frame 10 and the plastic member 20 may have various shapes without being limited to the shapes shown in FIG. 1. Here, the glass frame 10 may adjoin at least one surface of the plastic member 20. The adjoined structure may be realized by bonding using a polyurethane bonding agent.

In some embodiments, the glass frame 10 may be selected from any products applicable to typical electronic device housings or may be commercially available.

In some embodiments, the plastic member 20 may be formed of the polyamide resin composition through various molding methods, such as injection molding, extrusion molding, vacuum molding, casting, and the like. Specifically, the plastic member 20 may be an interior material of electric/electronic devices and the like.

Next, the present invention will be described in more detail with reference to some examples. It should be understood that these examples are provided for illustration only and are not to be construed in any way as limiting the present invention.

**EXAMPLE**

Details of components used in the following examples and comparative examples are as follows. (A) Aromatic polyamide resin

Polyamide MXD10 (Manufacturer: Mitsubishi Gas Chemical Co., Ltd., Product Name: LEXTER8000) was used.

(B) Aliphatic polyamide resin

Polyamide 10.12 (Manufacturer: Shandong Guangyin New Materials Co., Ltd., Product Name: B150) was used.

(C) Glass fiber

Flat glass fibers (Manufacturer: Nittobo Co., Ltd., Product Name: CSG 3PA-820) were used.

(D) Poly(ether ester amide) block copolymer

(D1) A polyamide 12-polytetramethylene oxide block copolymer (Manufacturer: Evonik, Product Name: Vestamid E62-S3) was used.

(D2) A polyamide 6-polyethylene oxide block copolymer (PA6-b-PEO, Manufacturer: Sanyo Chemical Co., Ltd., Product Name: Pelestat 1251) was used.

(E) Talc

Talc (Manufacturer: KOCH, Product Name: KCM-6300C) was used.

**Examples 1 to 9 and Comparative Examples 1 to 9**

The aforementioned components were mixed in amounts as listed in Tables 1 to 4, followed by extrusion at 260°C, thereby preparing a thermoplastic resin composition in pellet form. Here, extrusion was performed using a twin-screw extruder (L/D: 44, Φ: 45 mm). The prepared pellets were dried at 80°C for 4 hours or more and then subjected to injection molding using a 6 oz. injection molding machine (molding temperature: 280°C, mold temperature: 80°C), thereby preparing specimens. The prepared specimens were evaluated as to the following properties. Results are shown in Tables 1, 2, 3 and 4, wherein the total amount of (A) aromatic polyamide resin and (B) aliphatic polyamide resin is 100 parts by weight.

Property Evaluation

(1) Bonding strength (potential energy, unit: mJ): Bonding strength (potential energy) was measured upon detachment of a specimen having a size of 50 mm × 50 mm × 4 mm from a glass plate having a size of 25 mm × 25 mm × 0.7 mm by dropping a dart having a mass of 10 g to 500 g from a height of 50 cm onto the specimen using a dropping tester, with the dart secured to an upper end of the dropping tester and the specimen secured to a lower end thereof, in accordance with a DuPont drop test, in which 0.018 g of a polyurethane-based bonding agent (EH9777BS, H.B. Fuller Co., Ltd.) was coated to a thickness of 1 mm on the specimen at 110°C and the glass plate was attached to the polyurethane-based bonding agent on the specimen, followed by curing the polyurethane-based bonding agent at 25°C and 50% RH for 72 hours.

$$\text{Potential energy } (Ep) = \text{mass (mass of dart upon detachment)} \times 9.8 \text{ (acceleration of gravity)} \times 50 \text{ (height of dart upon detachment)}$$

(2) Evaluation of detachability: The presence of a bonding agent remaining on a specimen (50 mm × 50 mm × 4 mm) was checked upon detachment of the specimen from a glass plate (25 mm × 25 mm × 0.7 mm) by dropping a dart having a diameter of 5 mm onto the specimen at a dropping rate of 20 mm/min using a universal testing machine (UTM), with the dart secured to an upper jig of the UTM and the glass plate secured to a lower end thereof, in which 0.018 g of a polyurethane-based bonding agent (EH9777BS, H.B. Fuller Co., Ltd.) was coated to a thickness of 1 mm on the specimen at 110°C and the glass plate was attached to the polyurethane-based bonding agent on the specimen, followed by curing the polyurethane-based bonding agent at 25°C and 50% RH for 72 hours and heating the polyurethane-based bonding agent at 75°C for 15 min. (OK: no residual bonding agent, NG: residual bonding agent)

(3) Notched Izod impact resistance (unit: kgf cm/cm): Notched Izod impact strength was measured on a 1/8" thick specimen in accordance with ASTM D256.

(4) Heat deflection temperature (HDT) (unit: °C): HDT was measured under a load of 1.82 MPa at a heating rate of 120°C/hr in accordance with ASTM D648.

(5) Flexural modulus (unit: kgf/cm$^2$): Flexural modulus was measured on a 6.4 mm thick specimen at a rate of 2.8 mm/min in accordance with ASTM D790.

Table 1

|  | Example | | | | |
|---|---|---|---|---|---|
|  | 1 | 2 | 3 | 4 | 5 |
| (A) (wt%) | 14.6 | 29.3 | 45 | 29.3 | 293 |
| (B) (wt%) | 85.4 | 70.7 | 55 | 70.7 | 707 |
| (C) (parts by weight) | 144 | 144 | 144 | 120 | 180 |

(continued)

| | Example | | | | |
|---|---|---|---|---|---|
| | 1 | 2 | 3 | 4 | 5 |
| (D1) (parts by weight) | 22 | 22 | 22 | 22 | 22 |
| (D2) (parts by weight) | - | - | - | - | - |
| (E) (parts by weight) | 0.49 | 0.49 | 0.49 | 0.49 | 0.49 |
| Bonding strength | 850 | 850 | 860 | 880 | 750 |
| Detachability | OK | OK | OK | OK | OK |
| Notched Izod impact strength | 18.2 | 18.5 | 16.5 | 157 | 183 |
| HDT | 182 | 182 | 180 | 178 | 185 |
| Flexural modulus | 120,000 | 120,000 | 120,000 | 100,000 | 140,000 |
| * parts by weight: parts by weight relative to 100 parts by weight of polyamide resin (A+B) | | | | | |

Table 2

| | Example | | | |
|---|---|---|---|---|
| | 6 | 7 | 8 | 9 |
| (A) (wt%) | 29.3 | 29.3 | 29.3 | 293 |
| (B) (wt%) | 70.7 | 70.7 | 70.7 | 70.7 |
| (C) (parts by weight) | 144 | 144 | 144 | 144 |
| (D1) (parts by weight) | 21 | 24 | 22 | 22 |
| (D2) (parts by weight) | - | - | - | - |
| (E) (parts by weight) | 0.49 | 0.49 | 0.2 | 1 |
| Bonding strength | 820 | 880 | 850 | 850 |
| Detachability | OK | OK | OK | OK |
| Notched Izod impact strength | 17.8 | 18.8 | 19.5 | 17.5 |
| HDT | 181 | 183 | 181 | 184 |
| Flexural modulus | 128,000 | 110,000 | 120,000 | 120,000 |
| * parts by weight: parts by weight relative to 100 parts by weight of polyamide resin (A+B) | | | | |

Table 3

| | Comparative Example | | | |
|---|---|---|---|---|
| | 1 | 2 | 3 | 4 |
| (A) (wt%) | 1 | 60 | 29.3 | 29.3 |
| (B) (wt%) | 99 | 40 | 70.7 | 707 |
| (C) (parts by weight) | 144 | 144 | 90 | 210 |
| (D1) (parts by weight) | 22 | 22 | 22 | 22 |
| (D2) (parts by weight) | - | - | - | - |
| (E) (parts by weight) | 0.49 | 0.49 | 0.49 | 0.49 |
| Bonding strength | 1,050 | 800 | 850 | 600 |

(continued)

|  | Comparative Example | | | |
|---|---|---|---|---|
|  | 1 | 2 | 3 | 4 |
| Detachability | NG | OK | OK | NG |
| Notched Izod impact strength | 19.0 | 13.7 | 136 | 19.8 |
| HDT | 183 | 174 | 172 | 195 |
| Flexural modulus | 120.000 | 100,000 | 85,000 | 160,000 |
| * parts by weight: parts by weight relative to 100 parts by weight of polyamide resin (A+B) | | | | |

Table 4

|  | Comparative Example | | | | |
|---|---|---|---|---|---|
|  | 5 | 6 | 7 | 8 | 9 |
| (A) (wt%) | 29.3 | 29.3 | 29.3 | 29.3 | 29.3 |
| (B) (wt%) | 70.7 | 70.7 | 70.7 | 70.7 | 70.7 |
| (C) (parts by weight) | 144 | 144 | 144 | 144 | 144 |
| (D1) (parts by weight) | 15 | 30 | - | 22 | 22 |
| (D2) (parts by weight) | - | - | 22 | - | - |
| (E) (parts by weight) | 0.49 | 0.49 | 0.49 | 0.05 | 3 |
| Bonding strength | 550 | 1,050 | 900 | 860 | 800 |
| Detachability | OK | NG | NG | OK | OK |
| Notched Izod impact strength | 16.5 | 19.7 | 17.8 | 18.5 | 13.8 |
| HDT | 182 | 181 | 182 | 174 | 182 |
| Flexural modulus | 125,000 | 95,000 | 120,000 | 120,000 | 110,000 |
| * parts by weight: parts by weight relative to 100 parts by weight of polyamide resin (A+B) | | | | | |

From the above result, it could be seen that the polyamide resin compositions according to the present invention exhibited good properties in terms of adhesion (bonding strength) and detachability with respect to a polyurethane bonding agent, impact resistance (notched Izod impact strength), heat resistance (HDT), rigidity (flexural modulus), and the like.

Conversely, it could be seen that the polyamide resin composition of Comparative Example 1 comprising an insufficient amount of the aromatic polyamide resin and an excess of the aliphatic polyamide resin suffered from deterioration in detachability and the like; the polyamide resin composition of Comparative Example 2 comprising an excess of the aromatic polyamide resin and an insufficient amount of the aliphatic polyamide resin suffered from deterioration in impact resistance, heat resistance, and the like; the polyamide resin composition of Comparative Example 3 comprising an insufficient amount of the glass fiber suffered from deterioration in impact resistance, heat resistance, rigidity, and the like; and the polyamide resin composition of Comparative Example 4 comprising an excess of the glass fiber suffered from deterioration in adhesion, detachability, and the like. It could be seen that the polyamide resin composition of Comparative Example 5 comprising an insufficient amount of the poly(ether ester amide) block copolymer suffered from deterioration in adhesion and the like; the polyamide resin composition of Comparative Example 6 comprising an excess of the poly(ether ester amide) block copolymer suffered from deterioration in detachability and the like; and the polyamide resin composition of Comparative Example 7 comprising polyamide 6-polyethylene oxide block copolymer (D2) instead of the poly(ether ester amide) block copolymer according to the present invention suffered from deterioration in detachability and the like. In addition, it could be seen that the polyamide resin composition of Comparative Example 8 comprising an insufficient amount of talc suffered from deterioration in heat resistance and the like; and the polyamide resin composition of Comparative Example 9 comprising an excess of talc suffered from deterioration in impact resistance and the like.

Although the present invention has been described with reference to some example embodiments, it should be understood by those skilled in the art that these embodiments are given by way of illustration only, and that various modifications, variations and alterations can be made without departing from the spirit and scope of the invention. Therefore, the embodiments should not be construed as limiting the technical spirit of the present invention, but should be construed as illustrating the technical spirit of the present invention. The scope of the invention should be interpreted according to the following appended claims as covering all modifications or variations derived from the appended claims and equivalents thereto.

## Claims

1. A polyamide resin composition comprising:

   100 parts by weight of a polyamide resin comprising 5 wt% to 55 wt% of an aromatic polyamide resin and 45 wt% to 95 wt% of an aliphatic polyamide resin;
   100 parts by weight to 200 parts by weight of glass fiber;
   20 parts by weight to 25 parts by weight of a poly(ether ester amide) block copolymer; and
   0.1 parts by weight to 2 parts by weight of talc,
   wherein the poly(ether ester amide) block copolymer is a block copolymer of a reaction mixture comprising an amino carboxylic acid having 6 or more carbon atoms, a lactam or a salt of diamine-dicarboxylic acid, polytetramethylene glycol, and a dicarboxylic acid having 4 to 20 carbon atoms.

2. The polyamide resin composition according to claim 1, wherein the aromatic polyamide resin is a polymer of an aliphatic dicarboxylic acid and an aromatic diamine.

3. The polyamide resin composition according to claim 1, wherein the aliphatic polyamide resin comprises at least one of polyamide 11, polyamide 12, polyamide 4.6, polyamide 6.6, polyamide 6.10, polyamide 6.12, polyamide 10.10, and polyamide 10.12.

4. The polyamide resin composition according to claim 1, wherein the glass fiber has a rectangular or elliptical cross-section, a cross-section aspect ratio of 1.5 to 10, and a short-side length of 2 $\mu$m to 10 $\mu$m in cross-section.

5. The polyamide resin composition according to claim 1, wherein the glass fiber and the poly(ether ester amide) block copolymer are present in a weight ratio of 1:0.1 to 1:0.2.

6. The polyamide resin composition according to claim 1, wherein the poly(ether ester amide) block copolymer and the talc are present in a weight ratio of 1:0.005 to 1:0.08.

7. The polyamide resin composition according to claim 1, wherein the polyamide resin composition has a bonding strength of 700 mJ to 950 mJ, as measured upon detachment of a specimen having a size of 50 mm $\times$ 50 mm $\times$ 4 mm from a glass plate having a size of 25 mm $\times$ 25 mm $\times$ 0.7 mm by dropping a dart having a mass of 10 g to 500 g from a height of 50 cm onto the specimen using a dropping tester, with the dart secured to an upper end of the dropping tester and the specimen secured to a lower end thereof, in accordance with a DuPont drop test, in which 0.018 g of a polyurethane-based bonding agent is coated to a thickness of 1 mm on the specimen at 110°C and the glass plate is attached to the specimen via the polyurethane-based bonding agent, followed by curing the polyurethane-based bonding agent at 25°C and 50% RH for 72 hours.

8. The polyamide resin composition according to claim 1, wherein the polyamide resin composition prevents a bonding agent from remaining on a specimen having a size of 50 mm $\times$ 50 mm $\times$ 4 mm upon detachment of the specimen from a glass plate having a size of 25 mm $\times$ 25 mm $\times$ 0.7 mm by dropping a dart having a diameter of 5 mm onto the specimen at a dropping rate of 20 mm/min using a universal testing machine, with the dart secured to an upper jig of the universal testing machine and the glass plate secured to a lower end thereof, in which 0.018 g of a polyurethane-based bonding agent is coated to a thickness of 1 mm on the specimen at 110°C and the glass plate is attached to the specimen via the polyurethane-based bonding agent, followed by curing the polyurethane-based bonding agent at 25°C and 50% RH for 72 hours and heating the bonding agent at 75°C for 15 min.

9. The polyamide resin composition according to claim 1, wherein the polyamide resin composition has a notched Izod impact strength of 14 kgf·cm/cm to 30 kgf cm/cm, as measured on a 1/8" thick specimen in accordance with ASTM D256.

10. The polyamide resin composition according to claim 1, wherein the polyamide resin composition has a heat deflection temperature of 175°C to 190°C, as measured under a load of 1.82 MPa at a heating rate of 120°C/hr in accordance with ASTM D648.

11. The polyamide resin composition according to claim 1, wherein the polyamide resin composition has a flexural modulus of 90,000 kgf/cm$^2$ to 180,000 kgf/cm$^2$, as measured on a 6.4 mm thick specimen at a rate of 2.8 mm/min in accordance with ASTM D790.

12. A molded article formed of the polyamide resin composition according to any one of claims 1 to 11.

13. The molded article according to claim 12, wherein the molded article is an electronic device housing comprising a glass frame and a plastic member adjoining at least one surface of the glass frame.

FIG. 1

Europäisches
Patentamt

European
Patent Office

Office européen
des brevets

# EUROPEAN SEARCH REPORT

Application Number

EP 23 16 7911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 674 345 A1 (LOTTE ADVANCED MAT CO LTD [KR]) 1 July 2020 (2020-07-01) * paragraphs [0001], [0007]; claims 1-11; example 7 * ----- | 1-13 | INV. C08L77/06 C08L77/02 C08J5/04 C08K3/34 C08K7/14 C08G69/40 |

TECHNICAL FIELDS
SEARCHED      (IPC)

C08L
C08G
C08K
C08J

The present search report has been drawn up for all claims

| Place of search | Date of completion of the search | Examiner |
|---|---|---|
| Munich | 7 August 2023 | Arz, Marius |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ..................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 7911

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2023

| Patent document cited in search report | | Publication date | Patent family member(s) | | Publication date |
|---|---|---|---|---|---|
| EP 3674345 | A1 | 01-07-2020 | CN | 111378277 A | 07-07-2020 |
| | | | EP | 3674345 A1 | 01-07-2020 |
| | | | KR | 20200082436 A | 08-07-2020 |
| | | | US | 2020208031 A1 | 02-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140179850 A
- JP S56045419 B
- JP S55133424 A